# EUROPEAN PATENT SPECIFICATION

(11) **EP 2 272 631 B1**
(45) Date of publication and mention of the grant of the patent: **06.03.2013**
(21) Application number: 10182454.8
(22) Date of filing: 25.08.2005
(51) Int. Cl.: B25D 17/24, B25D 16/00

(54) **Power tool with dynamic vibration reducer**
Werkzeugmaschine mit dynamischem Schwingungsdämpfer
Machine-outil avec réducteur dynamique de vibrations

(30) Priority: 27.08.2004 JP 2004249011
(43) Date of publication of application: 12.01.2011
(62) Divisional of application: 08017019.4
(73) Proprietor: Makita Corporation, Anjo-shi, Aichi 446-8502 (JP)
(72) Inventor: Aoki, Yonosuke, Anjo-shi Aichi 446-8502 (JP)
(74) Representative: Kramer - Barske - Schmidtchen

(56) References cited:
- FR-A- 2 237 734
- JP-A- 52 109 673
- JP-A- 2003 011 073
- JP-A- 2004 216 524

## Description

### FIELD OF THE INVENTION

The present invention relates to a technique for reducing vibration in a reciprocating power tool, such as a hammer and a hammer drill, which linearly drives a tool bit.

### BACKGROUND OF THE INVENTION

Japanese non-examined laid-open Patent Publication No. 52-109673 discloses an electric hammer having a vibration reducing device. In the known electric hammer, a vibration proof chamber is integrally formed with a body housing (and a motor housing) in a region on the lower side of the body housing and forward of the motor housing. A dynamic vibration reducer is disposed within the vibration proof chamber.

In the above-mentioned known electric hammer, the vibration proof chamber that houses the dynamic vibration reducer is provided in the housing in order to provide an additional function of reducing vibration in working operation. As a result, however, the electric hammer increases in size.

Further power tools are known from JP 2004 216524 A, FR 2 237 734 A, JP 52 109 673 A and JP 2003 011 073 A.

### SUMMARY OF THE INVENTION

### (Object of the Invention)

It is, accordingly, an obj ect of the present invention to provide an effective technique for reducing vibration in working operation, while avoiding size increase of a power tool.

### (Subject-matter of the Invention)

The above-described object is achieved by the features of claimed independent claims 1 and 2. The "power tool" may particularly includes power tools, such as a hammer, a hammer drill, a jigsaw and a reciprocating saw, in which a tool bit performs a working operation on a workpiece by reciprocating. When the power tool is a hammer or a hammer drill, the "internal mechanism" according to this invention comprises a motion converting mechanism that converts the rotating output of the motor to linear motion and drives the tool bit in its longitudinal direction, and a power transmitting mechanism that appropriately reduces the speed of the rotating output of the motor and transmits the rotating output as rotation to the tool bit.

In the present invention, the dynamic vibration reducer is disposed in the power tool by utilizing a space within the housing. Therefore, the dynamic vibration reducer can perform a vibration reducing action in working operation, while avoiding size increase of the power tool. Further, the dynamic vibration reducer can be protected from an outside impact, for example, in the event of drop of the power tool. The manner in which the dynamic vibration reducer is "disposed by utilizing a space between the housing and the internal mechanism" includes not only the manner in which the dynamic vibration reducer is disposed by utilizing the space as-is, but also the manner in which it is disposed by utilizing the space changed in shape.
The present invention will be more apparent from the following detailed description and the drawings.

### BRIEF DESCRIPTION OF THE DRAWINGS

FIG. 1 is a side view showing a hammer drill with an outer housing and an inner housing shown in section.
FIG. 2 is a side view of the hammer drill, with the outer housing shown in section.
FIG. 3 is a plan view of the hammer drill, with the outer housing shown in section.
FIG. 4 is a plan view of the hammer drill, with the outer housing shown in section.
FIG. 5 is a rear view of the hammer drill, with the outer housing shown in section.
FIG. 6 is a sectional view taken along line A-A in FIG. 1.
FIG. 7 is a sectional view taken along line B-B in FIG. 1.

### DETAILED DESCRIPTION OF THE INVENTION

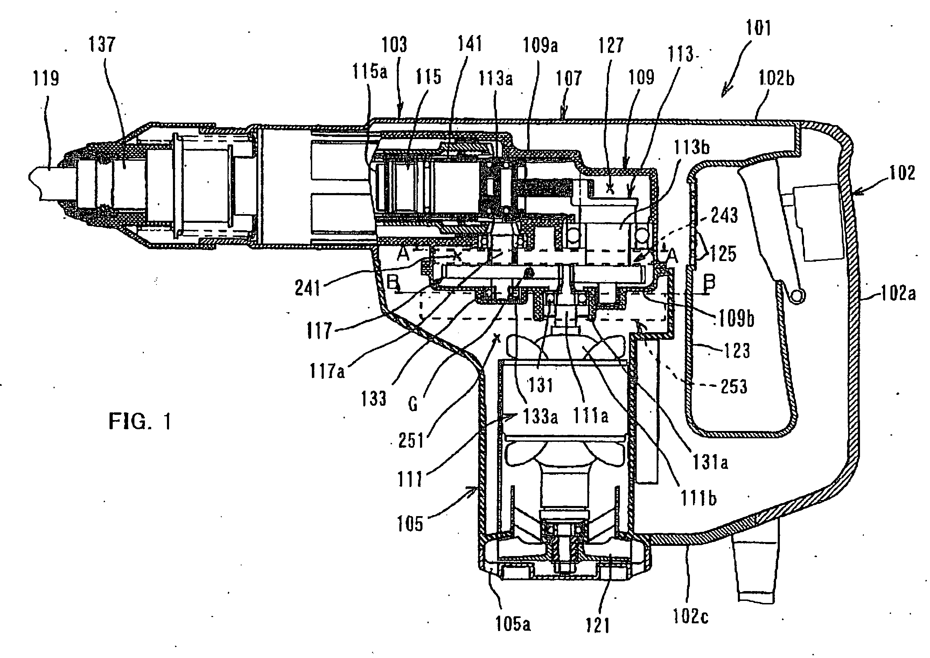

Representative embodiments of a power tool will now be described with reference to FIGS. 1 to 7. In each embodiment, an electric hammer drill will be explained as a representative example of a power tool. The fifth and sixth embodiments are embodiments of the invention and the first to fourth, seventh and eighth embodiments serve to explain the technology. Each of the embodiments features a dynamic vibration reducer disposed in a space within a housing or a handgrip. Before a detailed explanation of placement of the dynamic vibration reducer, the configuration of the hammer drill will be briefly described with reference to FIG. 1. The hammer drill 101 mainly includes a body 103, a hammer bit 119 detachably coupled to the tip end region (on the left side as viewed in FIG. 1) of the body 103 via a tool holder 137, and a handgrip 102 connected to a region of the body 103 on the opposite side of the hammer bit 119. The body 103, the hammer bit 119 and the handgrip 102 are features that correspond to the "housing", the "tool bit" and the "handgrip", respectively, according to the present invention.

The body 103 of the hammer drill 101 mainly includes a motor housing 105, a crank housing 107, and an inner housing 109 that is housed within the motor housing 105 and the crank housing 107. The motor housing 105 and the crank housing 107 are features that correspond to the "outer housing" according to this invention, and the inner housing 109 corresponds to the "inner housing". The motor housing 105 is located on the lower part of the handgrip 102 toward the front and houses a driving motor 111. The driving motor 111 is a feature that corresponds to the "motor" according to this invention.
In the present embodiments, for the sake of convenience of explanation, in the state of use in which the user holds the handgrip 102, the side of the hammer bit 119 is taken as the front side and the side of the handgrip 102 as the rear side. Further, the side of the driving motor 111 is taken as the lower side and the opposite side as the upper side; the vertical direction and the horizontal direction which are perpendicular to the longitudinal direction are taken as the vertical direction and the lateral direction, respectively.

The crank housing 107 is located on the upper part of the handgrip 102 toward the front and butt-joined to the motor housing 105 from above. The crank housing 107 houses the inner housing 109 together with the motor housing 105. The inner housing 109 houses a cylinder 141, a motion converting mechanism 113, and a gear-type power transmitting mechanism 114. The cylinder 141 houses a striking element 115 that is driven to apply a striking force to the hammer bit 119 in its longitudinal direction. The motion converting mechanism 113 comprises a crank mechanism and converts the rotating output of the driving motor 111 to linear motion and then drives the striking element 115 via an air spring. The power transmitting mechanism 117 transmits the rotating output of the driving motor 111 as rotation to the hammer bit 119 via a tool holder 137. Further, the inner housing 109 includes an upper housing 109a and a lower housing 109b. The upper housing 109a houses the entire cylinder 141 and most of the motion convening mechanism 113 and power transmitting mechanism 117, while the lower housing 109b houses the rest of the motion converting mechanism 113 and power transmitting mechanism 117. The motion converting mechanism 113, the striking element 115 and the power transmitting mechanism 117 are features that correspond to the "internal mechanism" according to this invention.

The motion converting mechanism 113 appropriately converts the rotating output of the driving motor 111 to linear motion and then transmits it to the striking element 115. As a result, an impact force is generated in the longitudinal direction of the hammer bit 119 via the striking element 115. The striking element 115 includes a striker 115a and an intermediate element in the form of an impact bolt (not shown). The striker 115a is driven by the sliding movement of a piston 113a of the motion converting mechanism 113 via the action of air spring within the cylinder 141. Further, the power transmitting mechanism 117 appropriately reduces the speed of the rotating output of the driving motor 111 and transmits the rotating output as rotation to the hammer bit 119. Thus, the hammer bit 119 is caused to rotate in its circumferential direction. The hammer drill 101 can be switched by appropriate operation of the user between a hammer mode in which a working operation is performed on a workpiece by applying only a striking force to the hammer bit 119 in the longitudinal direction, and a hammer drill mode in which a working operation is performed on a workpiece by applying an longitudinal striking force and a circumferential rotating force to the hammer bit 119.

The hammering operation in which a striking force is applied to the hammer bit 119 in the longitudinal direction by the motion converting mechanism 113 and the striking element 115, and the hammer-drill operation in which a rotating force is applied to the hammer bit 119 in the circumferential direction by the power transmitting mechanism 117 in addition to the striking force in the longitudinal direction are known in the art. Also, the mode change between the hammer mode and the hammer drill mode is known in the art. These known techniques are not directly related to this invention and therefore will not be described in further detail.

The hammer bit 119 moves in the longitudinal direction on the axis of the cylinder 141. Further, the driving motor 111 is disposed such that the axis of an output shaft 111a is perpendicular to the axis of the cylinder 141. The inner housing 109 is disposed above the driving motor 111.

The handgrip 102 includes a grip 102a to be held by the user and an upper and a lower connecting portions 102b, 102c that connect the grip 102a to the rear end of the body 103. The grip 102a vertically extends and is opposed to the rear end af the body 103 with a predetermined spacing. In this state, the grip 102a is detachably connected to the rear end of the body 103 via the upper and lower connecting portions 102b, 102c.

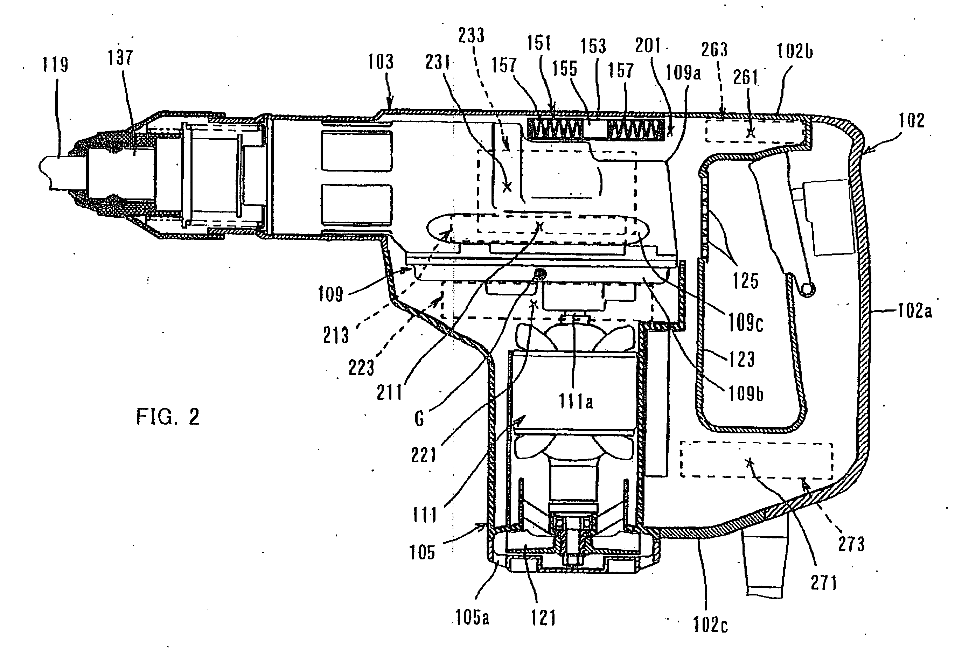

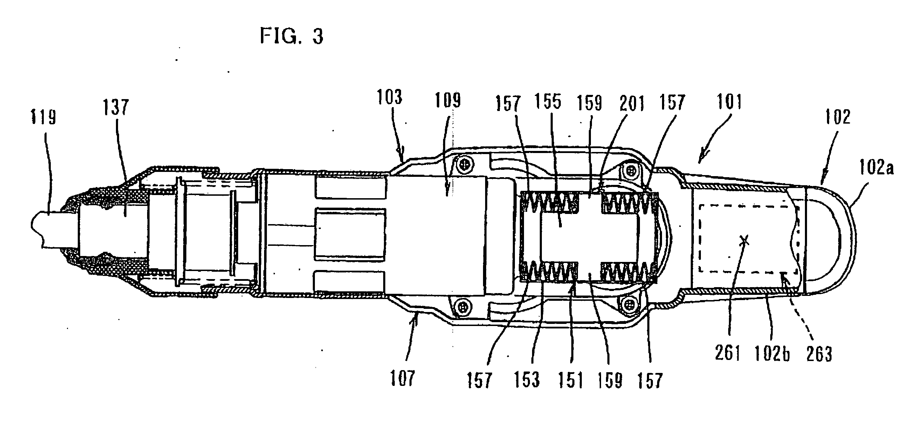

A dynamic vibration reducer 151 is provided in the hammer drill 101 in order to reduce vibration which is caused in the hammer drill 101, particularly in the longitudinal direction of the hammer bit 119, during hammering or hammer-drill operation. The dynamic vibration reducer 151 is shown as an example in FIGS. 2 and 3 in sectional view. The dynamic vibration reducer 151 mainly includes a box-like (or cylindrical) vibration reducer body 153, a weight 155 and biasing springs 157 disposed on the front and rear sides of the weight 155. The weight 155 is disposed within the vibration reducer body 153 and can move in the longitudinal direction of the vibration reducer body 153. The biasing spring 157 is a feature that corresponds to the "elastic element" according to the present invention. The biasing spring 157 applies a spring force to the weight 155 when the weight 155 moves in the longitudinal direction of the vibration reducer body 153.

Placement of the dynamic vibration reducer 151 will now be explained with respect to each embodiment.

### (First Embodiment)

In the first embodiment, as shown in FIGS. 2 and 3, the dynamic vibration reducer 151 is disposed by utilizing a space in the upper region inside the body 103, or more specifically, a space 201 existing between the inner wall surface of the upper region of the crank housing 107 and the outer wall surface of the upper region of an upper housing 109a of the inner housing 109. The dynamic vibration reducer 151 is disposed in the space 201 such that the direction of movement of the weight 155 or the vibration reducing direction coincides with the longitudinal direction of the hammer bit 119. The space 201 is dimensioned to be larger in the horizontal directions (the longitudinal and lateral directions) than in the vertical direction (the directions of the height). Therefore, in this embodiment, the dynamic vibration reducer 151 has a shape conforming to the space 201. Specifically, as shown in sectional view, the vibration reducer body 153 has a box-like shape short in the vertical direction and long in the longitudinal direction. Further, projections 159 are formed on the right and left sides of the weight 155 in the middle in the longitudinal direction, The biasing springs 157 are disposed between the projections 159 and the front end and the rear end of the vibration reducer body 153. Thus, the amount of travel of the weight 155 can be maximized while the longitudinal length of the vibration reducer body 153 can be minimized. Further, the movement of the weight 155 can be stabilized.

Thus, in the first embodiment, the dynamic vibration reducer 151 is disposed by utilizing the space 201 existing within the body 103. As a result, vibration caused in working operation of the hammer drill 101 can be reduced by the vibration reducing action of the dynamic vibration reducer 151, while size increase of the body 103 can be avoided. Further, by placement of the dynamic vibration reducer 151 within the body 103, the dynamic vibration reducer 151 can be protected from an outside impact in the event of drop of the hammer drill 101.

As shown in FIG. 2, generally, a center of gravity G of the hammer drill 101 is located below the axis of the cylinder 141 and slightly forward of the axis of the driving motor 111. Therefore, when, like this embodiment, the dynamic vibration reducer 151 is disposed within the space 201 existing between the inner wall surface of the upper region of the crank housing 107 and the outer wall surface of the upper region of the upper housing 109a of the inner housing 109, the dynamic vibration reducer 151 is disposed on the side of the axis of the cylinder 141 which is opposite to the center of gravity G of the hammer drill 101. Thus, the center of gravity G of the hammer drill 101 is located closer to the axis of the cylinder 141, which is effective in lessening or preventing vibration in the vertical direction. Further, the dynamic vibration reducer 151 disposed in the space 201 is located relatively near to the axis of the cylinder 141, so that it can perform an effective vibration reducing action against vibration in working operation using the hammer drill 101.

### (Second Embodiment)

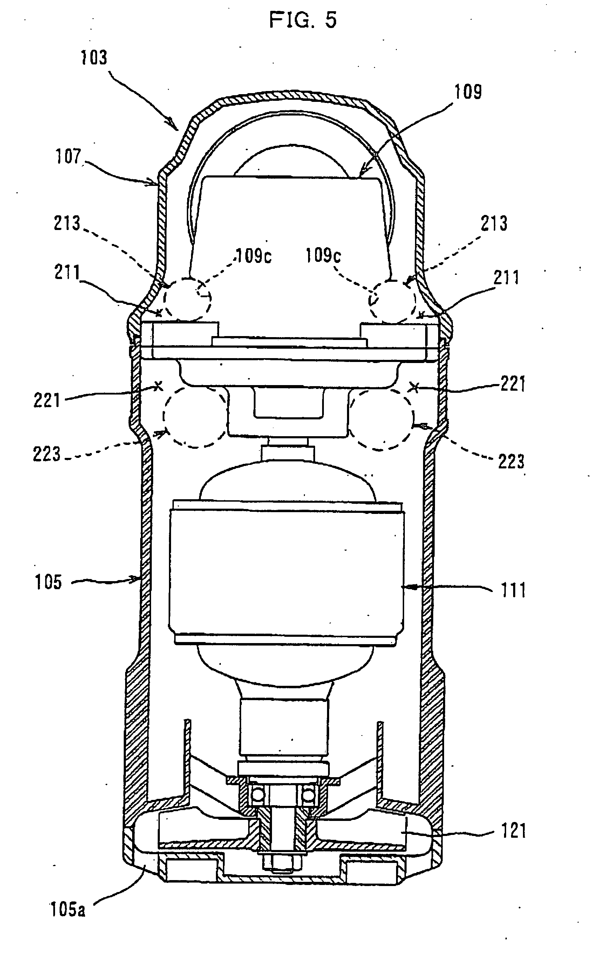

In the second representative embodiment, as shown in FIGS. 2 and 5, a dynamic vibration reducer 213 is disposed by utilizing a space in the side regions toward the upper portion within the body 103, or more specifically, right and left spaces 21 existing between the right and left inner wall surfaces of the side regions of the crank housing 107 and the right and left outer wall surfaces of the side regions of the upper housing 109a. The spaces 211 correspond to the lower region of the cylinder 141 and extend in a direction parallel to the axis of the cylinder 141 or the longitudinal direction of the cylinder 141. Therefore, in this case, as shown by dashed lines in FIGS. 2 and 5, the dynamic vibration reducer 213 has a cylindrical shape and is disposed such that the direction of movement of the weight or the vibration reducing direction coincides with the longitudinal direction of the hammer bit 119. The dynamic vibration reducer 213 is the same as the first embodiment in the construction, except for the shape, including a body, a weight and biasing springs, which are not shown.

According to the second embodiment, in which the dynamic vibration reducer 213 is placed in the right and left spaces 211 existing between the right and left inner wall surfaces of the side region of the crank housing 107 and the right and left outer wall surfaces of the side region of the upper housing 109a, like the first embodiment, the dynamic vibration reducer 213 can perform the vibration reducing action in working operation of the hammer drill 101, while avoiding size increase of the body 103. Further, the dynamic vibration reducer 213 can be protected from an outside impact in the event of drop of the hammer drill 101. Especially in the second embodiment, the dynamic vibration reducer 213 is disposed in a side recess 109c of the upper housing 7 09a, so that the amount of protrusion of the dynamic vibration reducer 213 from the side of the upper housing 109a can be lessened. Therefore, high protection can be provided against an outside impact. The upper housing 109a is shaped to minimize the clearance between the mechanism component parts within the upper housing 109a and the inner wall surface of the upper housing 109a. To this end, the side recess 109c is formed in the upper housing 109a. Specifically, due to the positional relationship between the cylinder 141 and a driving gear of the motion converting mechanism 113 or the power transmitting mechanism 117 which is located below the cylinder 141, the side recess 109c is defined as a recess formed in the side surface of the upper housing 109a and extending in the axial direction of the cylinder 141. The side recess 109c is a feature that corresponds to the "recess" according to this invention.

Further, in the second embodiment, the dynamic vibration reducer 213 is placed very close to the center of gravity G of the hammer drill 101 as described above. Therefore, even with a provision of the dynamic vibration reducer 213 in this position, the hammer drill 101 can be held in good balance of weight in the vertical and horizontal directions perpendicular to the longitudinal direction of the hammer bit 119, so that generation of vibration in these vertical and horizontal directions can be effectively lessened or prevented. Moreover, the dynamic vibration reducer 213 is placed relatively close to the axis of the cylinder 141, so that it can perform an effective vibration reducing function against vibration input in working operation of the hammer drill 101.

As shown in FIGS, 2 and 5, the hammer drill 101 having the driving motor 11 includes a cooling fan 121 for cooling the driving motor 111. When the cooling fan 121 is rotated, cooling air is taken in through inlets 125 of a cover 123 that covers the rear surface of the body 103. The cooling air is then led upward within the motor housing 105 and cools the driving motor 111. Thereafter, the cooling air is discharged to the outside through an outlet 105a formed in the bottom of the motor housing 105. Such a flow of the cooling air can be relatively easily guided into the region of the dynamic vibration reducer 213. Thus, according to the second embodiment, the dynamic vibration reducer 213 can be advantageously cooled by utilizing the cooling air for the driving motor 111.

Further, in the hammer drill 101, when the motion convening mechanism 113 in the inner housing 109 is driven, the pressure within a crank chamber 127 (see FIG. 1) which comprises a hermetic space surrounded by the inner housing 109 fluctuates (by linear movement of the piston 113a within the cylinder 141 shown in FIG. 1). By utilizing the pressure fluctuations, a forced vibration method may be used in which a weight is positively driven by introducing the fluctuating pressure into the body of the dynamic vibration reducer 213. In this case, according to the second embodiment, with the construction in which the dynamic vibration reducer 213 is placed adjacent to the inner housing 109 that houses the motion converting mechanism 113, the fluctuating pressure in the crank chamber 127 can be readily introduced into the dynamic vibration reducer 213. Further, when, for example, the motion converting mechanism 113 comprises a crank mechanism as shown in FIG. 1, the construction for forced vibration of a weight of the dynamic vibration reducer 213 can be readily provided by providing an eccentric portion in the crank shaft. Specifically, the eccentric rotation of the eccentric portion is converted into linear motion and inputted as a driving force of the weight in the dynamic vibration reducer 213, so that the weight is forced vibrated.

### (Third Embodiment)

In the third representative embodiment, as shown in FIGS. 2 and 5, a dynamic vibration reducer 223 is disposed by utilizing a space in the side regions within the body 103, or more specifically, a space 221 existing between one axial end (upper end) of the driving motor 111 and the bottom portion of the lower housing 107b and extending along the axis of the cylinder 141 (in the longitudinal direction of the hammer bit 119). The space 221 extends in a direction parallel to the axis of the cylinder 141, or in the longitudinal direction. Therefore, in this case, as shown by dashed line in FIGS. 2 and 5, the dynamic vibration reducer 223 has a cylindrical shape and is disposed such that the direction of movement of the weight or the vibration reducing direction coincides with the longitudinal direction of the hammer bit 119. The dynamic vibration reducer 213 is the same as the first embodiment in the construction, except for the shape, including a body, a weight and biasing springs, which are not shown.

According to the third embodiment, in which the dynamic vibration reducer 223 is placed in the space 221 existing between one axial end (upper end) of the driving motor 111 and the lower housing 107b, like the first and second embodiments, the dynamic vibration reducer 223 can perform the vibration reducing action in working operation of the hammer drill 101, while avoiding size increase of the body 103. Further, the dynamic vibration reducer 223 can be protected from an outside impact in the event of drop of the hammer drill 101.

In the third embodiment, the dynamic vibration reducer 223 is located close to the center of gravity G of the hammer drill 101 like the second embodiment and adjacent to the driving motor 111. Therefore, like the second embodiment, even with a provision of the dynamic vibration reducer 223 in this position, the hammer drill 101 can be held in good balance of weight in the vertical and horizontal directions perpendicular to the longitudinal direction of the hammer bit 119. Moreover, a further cooling effect can be obtained especially because the dynamic vibration reducer 223 is located in the passage of the cooling air for cooling the driving motor 111. Further, although the dynamic vibration reducer 223 is located at a slight more distance from the crank chamber 127 compared with the second embodiment, the forced vibration method can be relatively easily realized in which a weight is positively driven by introducing the fluctuating pressure of the crank chamber into the dynamic vibration reducer 223.

### (Fourth Embodiment)

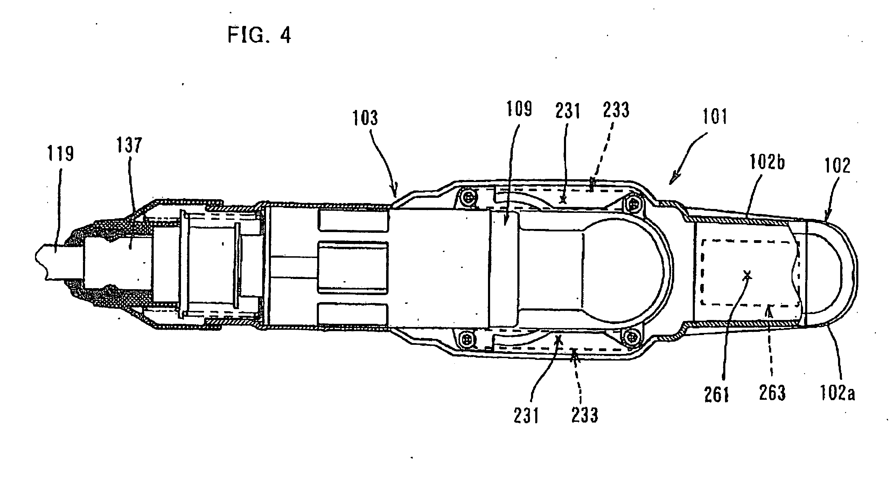

In the fourth representative embodiment, as shown in FIGS. 2 and 4, a dynamic vibration reducer 233 is disposed by utilizing a space existing in the right and left side upper regions within the body 103, or more specifically, a space 231 existing between the right and left inner wall surfaces of the side regions of the crank housing 107 and the right and left outer wall surfaces of the side regions of the upper housing 109a of the inner housing 109. The space 231 is relatively limited in lateral width due to the narrow clearance between the inner wall surfaces of the crank housing 107 and the outer wall surfaces of the upper housing 109a, but it is relatively wide in the longitudinal and vertical directions. Therefore, in this embodiment, the dynamic vibration reducer 233 has a shape conforming to the space 231. Specifically, as shown by dashed line in FIGS. 2 and 4, the dynamic vibration reducer 233 has a box-like shape short in the lateral direction and long in the longitudinal and vertical directions and is disposed such that the direction of movement of the weight or the vibration reducing direction coincides with the longitudinal direction of the hammer bit 119. The dynamic vibration reducer 233 is the same as the first embodiment in the construction, except for the shape, including a body, a weight and biasing springs, which are not shown.

According to the fourth embodiment, in which the dynamic vibration reducer 233 is placed in the space 231 existing between the right and left inner wall surfaces of the side regions of the crank housing 107 and the right and left outer wall surfaces of the side regions of the upper housing 109a of the inner housing 109, like the above-described embodiments, the dynamic vibration reducer 233 can perform the vibration reducing action in working operation of the hammer drill 101, while avoiding size increase of the body 103. Further, the dynamic vibration reducer 233 can be protected from an outside impact in the event of drop of the hammer drill 101. Especially, the dynamic vibration reducer 233 of the fourth embodiment occupies generally the entirety of the space 231 existing between the inner wall surfaces of the side regions of the crank housing 107 and the outer wall surfaces of the side regions of the upper housing 109a. The dynamic vibration reducer 233 in the space 231 is located closest to the axis of the cylinder 141 among the above-described embodiments, so that it can perform a more effective vibration reducing action against vibration input in working operation of the hammer drill 101.

### (Fifth Embodiment)

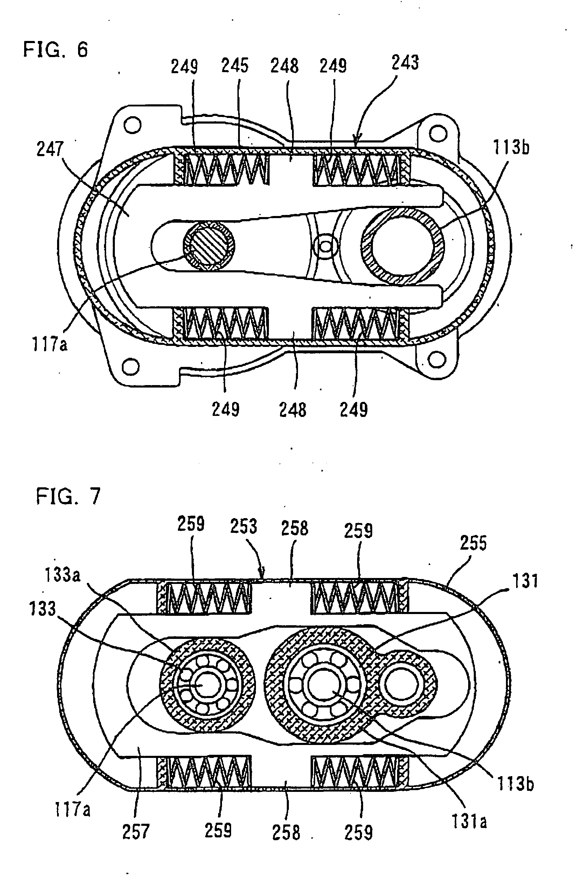

In the fifth representative embodiment, as shown in FIGS. 1 and 6, a dynamic vibration reducer 243 is disposed in a space existing inside the body 103, or more specifically, in the crank chamber 127 which comprises a hermetic space within the inner housing 109 that houses the motion converting mechanism 113 and the power transmitting mechanism 117. More specifically, as shown by dotted line in FIG. 1, the dynamic vibration reducer 243 is disposed in the vicinity of the joint between the upper housing 109a and the lower housing 109b of the inner housing 109 by utilizing a space 241 existing between the inner wall surface of the inner housing 109 and the motion converting mechanism 113 and power transmitting mechanism 117 within the inner housing 109. The dynamic vibration reducer 243 is disposed such that the vibration reducing direction coincides with the longitudinal direction of the hammer bit 119.

In order to dispose the dynamic vibration reducer 243 in the space 241, as shown in FIG. 6 in sectional view, a body 245 of the dynamic vibration reducer 243 is formed into an oval (elliptical) shape in plan view which conforms to the shape of the inner wall surface of the upper housing 109a of the inner housing 109. A weight 247 is disposed within the vibration reducer body 245 and has a generally horseshoe-like shape in plan view. The weight 247 is disposed for sliding contact with a crank shaft 113b of the motion converting mechanism 113 and a gear shaft 117a of the power transmitting mechanism 117 in such a manner as to pinch them from the both sides. Thus, the wight 247 can move in the longitudinal direction (in the axial direction of the cylinder 141). Specifically, the crank shaft 113b and the gear shaft 117a are utilized as a member for guiding the movement of the weight 247 in the longitudinal direction. Projections 248 are formed on the right and left sides of the weight 247, and the biasing springs 249 are disposed on the opposed sides of the projections 248. Specifically, the biasing springs 249 connect the weight 247 to the vibration reducer body 243. When the weight 247 moves in the longitudinal direction of the vibration reducer body 243 (in the axial direction of the cylinder 141), the biasing springs 249 apply a spring force to the weight 247 in the opposite direction.

According to the fifth embodiment, in which the dynamic vibration reducer 243 is placed in the space 241 existing within the inner housing 109, like the above-described embodiments, the dynamic vibration reducer 243 can perform the vibration reducing action in working operation of the hammer drill 101, while avoiding size increase of the body 103. Further, the dynamic vibration reducer 243 can be protected from an outside impact in the event of drop of the hammer drill 101.
Further, in the fifth embodiment, the dynamic vibration reducer 243 is placed very close to the center of gravity G of the hammer drill 101 as described above. Therefore, even with a provision of the dynamic vibration reducer 243 in such a position, as explained in the second embodiment, the hammer drill 101 can be held in good balance of weight in the vertical and horizontal directions perpendicular to the longitudinal direction of the hammer bit 119, so that generation of vibration in these vertical and horizontal directions can be effectively lessened or prevented. Moreover, the dynamic vibration reducer 243 is placed relatively close to the axis of the cylinder 141, so that it can effectively perform a vibration reducing function against vibration caused in the axial direction of the cylinder 141 in working operation of the hammer drill 101. Further, the space surrounded by the inner housing 109 forms the crank chamber 127. Thus, with the construction in which the dynamic vibration reducer 243 is disposed within the crank chamber 127, when the forced vibration method is used in which the weight 247 of the dynamic vibration reducer 243 is forced to vibrate by utilizing the pressure fluctuations of the crank chamber 127, the crank chamber 127 can be readily connected to the space of the body 245 of the dynamic vibration reducer 243.

### (Sixth Embodiment)

In the sixth representative embodiment, as shown in FIGS. 1 and 7, a dynamic vibration reducer 253 is placed by utilizing a space existing inside the body 103, or more specifically, a space 251 existing in the upper portion of the motor housing 105. Therefore, the sixth embodiment can be referred to as a modification of the second embodiment. In the sixth embodiment, as shown by dotted line in FIG. 1, the dynamic vibration reducer 243 is disposed by utilizing the space 251 between the upper end of the rotor 111b of the driving motor 111 and the underside of the lower housing 109b of the inner housing 109. To this end, as shown in FIG. 7, a body 255 of the dynamic vibration reducer 253 is formed into an oval (elliptical) shape in sectional plan view, and a weight 257 is formed into a generally elliptical ring-like shape in plan view. The weight 257 is disposed for sliding contact with bearing receivers 131 a and 133a in such a manner as to pinch them from the both sides and can move in the longitudinal direction (in the axial direction of the cylinder 141). The bearing receiver 131a receives a bearing 131 that rotatably supports the output shaft 111a of the driving motor 111, and the bearing receiver 133a receives a bearing 133 that rotatably supports the gear shaft 117a of the motion converting mechanism 117. The bearing receivers 131a and 133a are also utilized as a member for guiding the movement of the weight 257 in the longitudinal direction. Further, projections 258 are formed on the right and left sides of the weight 257, and the biasing springs 259 are disposed on the opposed sides of the projections 258. Specifically, the biasing springs 259 connect the weight 257 to the vibration reducer body 253. When the weight 257 moves in the longitudinal direction of the vibration reducer body 253 (in the axial direction of the cylinder 141), the biasing springs 259 apply a spring force to the weight 257 in the opposite direction.

According to the sixth embodiment, in which the dynamic vibration reducer 253 is placed in the space 251 existing within the motor housing 105, like the above-described embodiments, the dynamic vibration reducer 253 can perform the vibration reducing action in the working operation of the hammer drill 101, while avoiding size increase of the body 103. Further, the dynamic vibration reducer 253 can be protected from an outside impact in the event of drop of the hammer drill 101.
Further, in the sixth embodiment, the dynamic vibration reducer 253 is placed close to the center of gravity G of the hammer drill 101 as described above. Therefore, even with a provision of the dynamic vibration reducer 243 in such a position, as explained in the second embodiment, the hammer drill 101 can be held in good balance of weight in the vertical and horizontal directions perpendicular to the longitudinal direction of the hammer bit 119, so that generation of vibration in these vertical and horizontal directions can be effectively lessened or prevented. Further, the lower position of the lower housing 109b is very close to the crank chamber 127. Therefore, when the method of causing forced vibration of the dynamic vibration reducer 253 is applied, the fluctuating pressure in the crank chamber 127 can be readily introduced into the dynamic vibration reducer 253. Moreover, the construction for causing forced vibration of the weight 257 can be readily provided by providing an eccentric portion in the crank shaft 113b of the motion converting mechanism 113. Specifically, the eccentric rotation of the eccentric portion is converted into linear motion and inputted as a driving force of the weight 257 in the dynamic vibration reducer 253, so that the weight 257 is forced vibrated.

### (Seventh Embodiment)

In the seventh representative embodiment, as shown in FIGS. 2 to 4, a dynamic vibration reducer 263 is disposed by utilizing a space existing inside the handgrip 102. As described above, the handgrip 102 includes a grip 102a to be held by the user and an upper and a lower connecting portions 102b, 102c that connect the grip 102a to the body 103. The upper connecting portion 102b is hollow and extends to the body 103. In the seventh embodiment, a dynamic vibration reducer 263 is disposed in a space 261 existing within the upper connecting portion 102b and extending in the longitudinal direction (in the axial direction of the cylinder 141). As shown by dotted line in FIGS. 2 to 4, the dynamic vibration reducer 263 has a rectangular shape elongated in the longitudinal direction. The dynamic vibration reducer 263 is the same as the first embodiment in the construction, except for the shape, including a body, a weight and biasing springs, which are not shown.

According to the seventh embodiment, in which the dynamic vibration reducer 263 is disposed in the space 261 existing inside the handgrip 102, like the above-described embodiments, the dynamic vibration reducer 263 can perform the vibration reducing action in working operation of the hammer drill 101, while avoiding size increase of the body 103, Further, the dynamic vibration reducer 263 can be protected from an outside impact in the event of drop of the hammer drill 101. Especially in the seventh embodiment, the dynamic vibration reducer 263 is disposed in the space 261 of the upper connecting portion 102b of the handgrip 102, which is located relatively close to the axis of the cylinder 141. Therefore, the vibration reducing function of the dynamic vibration reducer 263 can be effectively performed against vibration in the axial direction of the cylinder in working operation of the hammer drill 101.

Generally, in the case of the hammer drill 101 in which the axis of the driving motor 111 is generally perpendicular to the axis of the cylinder 141, the handgrip 102 is designed to be detachable from the rear end of the body 103. Therefore, when, like this embodiment, the dynamic vibration reducer 263 is disposed in the space 261 of the connecting portion 102b of the handgrip 102, the dynamic vibration reducer 263 can be mounted in the handgrip 102 not only in the manufacturing process, but also as a retrofit at the request of a purchaser.

### (Eighth Embodiment)

In the eighth representative embodiment, like the seventh embodiment, a dynamic vibration reducer 273 is disposed by utilizing a space existing inside the handgrip 102. Specifically, as shown by dotted line in FIG. 2, the dynamic vibration reducer 273 is disposed by utilizing a space 271 existing within the lower connecting portion 102c of the handgrip 102. Like the above-described space 261 of the upper connecting portion 102b, the space 271 of the lower connecting portion 102c extends in the longitudinal direction (in the axial direction of the cylinder 141). Therefore, as shown by dotted line in FIG. 2, the dynamic vibration reducer 273 has a rectangular shape elongated in the longitudinal direction. The dynamic vibration reducer 273 is the same as the first embodiment in the construction, except for the shape, including a body, a weight and biasing springs, which are not shown.

According to the eighth embodiment, in which the dynamic vibration reducer 273 is disposed in the space 271 existing inside the handgrip 102, like the above-described embodiments, the dynamic vibration reducer 273 can perform the vibration reducing action in working operation of the hammer drill 101, while avoiding size increase of the body 103. Further, the dynamic vibration reducer 273 can be protected from an outside impact in the event of drop of the hammer drill 101. Further, if the handgrip 102 is designed to be detachable from the body 103, like the seventh embodiment, the dynamic vibration reducer 273 can be mounted in the handgrip 102 not only in the manufacturing process, but also as a retrofit at the request of a purchaser.

In the above-described embodiments, an electric hammer drill has been described as a representative example of the power tool. However, other than the hammer drill, this invention can not only be applied, for example, to an electric hammer in which the hammer bit 119 performs only a hammering movement, but to any power tool, such as a reciprocating saw and a jigsaw, in which a working operation is performed on a workpiece by reciprocating movement of the tool bit.

### Description of Numerals

101 hammer drill (power tool)
102 handgrip
102a grip
102b, 102c upper and lower connecting portions
103 body (housing)
105 motor housing (outer housing)
105a outlet
107 crank housing
109 inner housing
109a upper housing
109b lower housing
109c side recess (recess)
111 driving motor (motor)
111a output shaft
111b rotor
113 motion converting mechanism (internal mechanism)
113a piston
113b crank shaft
115 striking mechanism
115a striker
117 power transmitting mechanism
117a gear shaft
119 hammer bit (tool bit)
121 cooling fan
123 cover
125 inlet
127 crank chamber
131, 133 gear
131a, 133a
137 tool holder
141 cylinder
151 front bearing
153 rear bearing
155 weight
157 biasing spring (elastic element)
159 projection
201, 211, 221, 231 space
213, 223, 233 dynamic vibration reducer
241 space
243 dynamic vibration reducer
245 vibration reducer body
247 weight
248 projection
249 biasing spring
251 space
253 dynamic vibration reducer
255 vibration reducer body
257 weight
258 projection
259 biasing spring
261, 271 space
263, 273 dynamic vibration reducer

## Claims

1. A power tool comprising:
a motor (111),
a motion converting mechanism (113) driven by the motor (111),
a housing (103) that houses the motor (111) and the motion converting mechanism (113),
a tool bit (119) disposed in one end of the housing (103) and driven by the motion converting mechanism (113) in the longitudinal direction of the tool bit (119) to perform a predetermined operation,
a handgrip (102) connected to the other end of the housing (103), and
a dynamic vibration reducer (253) including a weight (257) and an elastic element (259), the elastic element (259) being disposed between the weight (257) and the housing (119) and adapted to apply a biasing force to the weight (257), wherein the weight (257) reciprocates in the longitudinal direction of the tool bit (119) against the biasing force of the elastic element (259), whereby the dynamic vibration reducer (253) reduces vibration which is caused in the housing (119) in the longitudinal direction of the tool bit (119) in the working operation,
wherein the housing (103) includes an inner housing (109) that houses the motion converting mechanism (113) and an outer housing (105, 107) that houses the inner housing (109) and the motor (111) such that the axial direction of the motor (111) crosses the longitudinal direction of the tool bit (119),
**characterized in that**
the power tool further comprises a power transmitting mechanism (117) for transmitting rotation from the motor (111) to the tool bit (119),
the dynamic vibration reducer (253) is disposed in the housing (103) between an upper axial end of the motor (111) and the inner housing (109)
the weight (257) of the dynamic vibration reducer (253) has an elliptical ring-like shape in a plan view in the axial direction of the motor (111), and
the inner housing (109) includes a first receiver (131a) to receive a first bearing (131) that rotatably supports an output shaft (111a) of the motor (111) and a second receiver (133a) to receive a second bearing (133) that rotatably supports a rotating element (117a) of the power transmitting mechanism (117), the inner housing (109) being configured such that the bearing receivers (131a, 133a) guide the linear movement of the weight (257) of the dynamic vibration reducer (253).

2. A power tool comprising:
a motor (111),
a motion converting mechanism (113) driven by the motor (111),
a housing (103) that houses the motor (111) and the motion converting mechanism (113),
a tool bit (119) disposed in one end of the housing (103) and driven by the motion converting mechanism (113) in the longitudinal direction of the tool bit (119) to perform a predetermined operation,
a handgrip (102) connected to the other end of the housing (103), and
a dynamic vibration reducer (243) including a weight (247) and an elastic element (249), the elastic element (249) being disposed between the weight (247) and the housing (119) and adapted to apply a biasing force to the weight (247), wherein the weight (247) reciprocates in the longitudinal direction of the tool bit (119) against the biasing force of the elastic element (249), whereby the dynamic vibration reducer (243) reduces vibration which is caused in the housing (119) in the longitudinal direction of the tool bit (119) in the working operation,
wherein the housing (103) includes an inner housing (109) that houses the motion converting mechanism (113) and an outer housing (105, 107) that houses the inner housing (109) and the motor (111) such that the axial direction of the motor (111) crosses the longitudinal direction of the tool bit (119),
**characterized in that**
the power tool further comprises a power transmitting mechanism (117) for transmitting rotation from the motor (111) to the tool bit (119),
the weight (247) of the dynamic vibration reducer (243) has a horseshoe - like shape in a plan view in the axial direction of the motor (111), and
the dynamic vibration reducer (243) is disposed in a space (241) existing in the inner housing (109) between an upper axial end of the motor (111) and the motion converting mechanism (113), the dynamic vibration reducer (243) being configured such that the linear movement of the weight (247) of the dynamic vibration reducer (243) is guided by component parts (113b, 117a) of the motion converting mechanism (113) and the power transmitting mechanism (117).

## Patentansprüche

1. Kraftwerkzeug, mit
einem Motor (111),
einem Bewegungsumwandlungsmechanismus (113), der durch den Motor (111) angetrieben wird,
einem Gehäuse (103), das den Motor (111) und den Bewegungsumwandlungsmechanismus (113) aufnimmt,
einem Werkzeugbit (119), das in einem Ende des Gehäuses (103) angeordnet und durch den Bewegungsumwandlungsmechanismus (113) in der Längsrichtung des Werkzeugbits (119) zum Durchführen eines vorbestimmten Betriebs angetrieben wird,
einem Handgriff (102), der mit dem anderen Ende des Gehäuses (103) verbunden ist, und
einem dynamischen Vibrationsreduzierer (253), der ein Gewicht (257) und ein elastisches Element (259) aufweist, wobei das elastische Element (259) zwischen dem Gewicht (257) und dem Gehäuse (119) angeordnet und zum Aufbringen einer Vorspannkraft auf das Gewicht (257) angepasst ist, wobei das Gewicht (257) sich in der Längsrichtung des Werkzeugbits (119) entgegen der Vorspannkraft des elastischen Elements (259) hin und her bewegt, wodurch der dynamische Vibrationsreduzierer (253) eine Vibration, die in dem Gehäuse (119) in der Längsrichtung des Werkzeugbits (119) in dem Arbeitsbetrieb verursacht wird, verringert,
bei dem das Gehäuse (103) ein Innengehäuse (109), das den Bewegungsumwandlungsmechanismus (113) aufnimmt, und ein Außengehäuse (105, 107), das das Innengehäuse (109) und den Motor (111) aufnimmt, so dass die Axialrichtung des Motors (111) die Längsrichtung des Werkzeugbits (119) kreuzt, aufweist,
**dadurch gekennzeichnet, dass**
das Leistungswerkzeug weiter einen Leistungsübertragungsmechanismus (117) zum Übertragen einer Drehung von dem Motor (111) zu dem Werkzeugbit (119) aufweist,
der dynamische Vibrationsreduzierer (253) in dem Gehäuse (103) zwischen einem oberen axialen Ende des Motors (111) und dem Innengehäuse (109) angeordnet ist,
das Gewicht (257) des dynamischen Vibrationsreduzierers (253) eine elliptische ringähnliche Form in einer Draufsicht in der Axialrichtung des Motors (111) aufweist, und
das Innengehäuse (109) eine erste Aufnahme (131a) zum Aufnehmen eines ersten Lagers (131), das eine Ausgangswelle (111a) des Motors (111) drehbar abstützt, und eine zweite Aufnahme (133a) zum Aufnehmen eines zweiten Lagers (133), das ein sich drehendes Element (117a) des Leistungsübertragungsmechanismus (117) drehbar abstützt, aufweist, wobei das Innengehäuse (109) so ausgebildet ist, dass die Lageraufnahmen (131a, 133a) die lineare Bewegung des Gewichts (257) des dynamischen Vibrationsreduzierers (253) führen.

2. Kraftwerkzeug, mit
einem Motor (111),
einem Bewegungsumwandlungsmechanismus (113), der durch den Motor (111) angetrieben wird,
einem Gehäuse (103), das den Motor (111) und den Bewegungsumwandlungsmechanismus (113) aufnimmt,
einem Werkzeugbit (119), das in einem Ende des Gehäuses (103) angeordnet und durch den Bewegungsumwandlungsmechanismus (113) in der Längsrichtung des Werkzeugbits (119) zum Durchführen eines vorbestimmten Betriebs angetrieben wird,
einem Handgriff (102), der mit dem anderen Ende des Gehäuses (103) verbunden ist, und
einem dynamischen Vibrationsreduzierer (243), der ein Gewicht (247) und ein elastisches Element (249) aufweist, wobei das elastische Element (249) zwischen dem Gewicht (247) und dem Gehäuse (119) angeordnet und zum Aufbringen einer Vorspannkraft auf das Gewicht (247) angepasst ist, wobei das Gewicht (247) sich in der Längsrichtung des Werkzeugbits (119) entgegen der Vorspannkraft des elastischen Elements (249) hin und her bewegt, wodurch der dynamische Vibrationsreduzierer (243) eine Vibration, die in dem Gehäuse (119) in der Längsrichtung des Werkzeugbits (119) in dem Arbeitsbetrieb verursacht wird, verringert,
bei dem das Gehäuse (103) ein Innengehäuse (109), das den Bewegungsumwandlungsmechanismus (113) aufnimmt, und ein Außengehäuse (105, 107), das das Innengehäuse (109) und den Motor (111) aufnimmt, so dass die Axialrichtung des Motors (111) die Längsrichtung des Werkzeugbits (119) kreuzt, aufweist,
**dadurch gekennzeichnet, dass**
das Leistungswerkzeug weiter einen Leistungsübertragungsmechanismus (117) zum Übertragen einer Drehung von dem Motor (111) zu dem Werkzeugbit (119) aufweist,
das Gewicht (247) des dynamischen Vibrationsreduzierers (243) eine hufenförmige Form in einer Draufsicht in der Axialrichtung des Motors (111) aufweist, und
der dynamische Vibrationsreduzierer (243) in einem Raum (241) angeordnet ist, der in dem Innengehäuse (109) zwischen einem oberen axialen Ende des Motors (111) und dem Bewegungsumwandlungsmechanismus (113) vorhanden ist, wobei der dynamische Vibrationsreduzierer (243) so ausgebildet ist, dass die lineare Bewegung des Gewichts (247) des dynamischen Vibrationsreduzierers (243) durch Bauelementteile (113b, 117a) des Bewegungsumwandlungsmechanismus (113) und des Leistungsübertragungsmechanismus (117) geführt wird.

## Revendications

1. Outil électrique comprenant :
un moteur (111),
un mécanisme de conversion de mouvement (113) entraîné par le moteur (111),
un logement (103) qui loge le moteur (111) et le mécanisme de conversion de mouvement (113),
une mèche d'outil (119) disposée dans une extrémité du logement (103) et entraînée par le mécanisme de conversion de mouvement (113) dans la direction longitudinale de la mèche d'outil (119) pour réaliser une opération prédéterminée,
une poignée (102) raccordée à l'autre extrémité du logement (103), et
un réducteur dynamique de vibrations (253) comprenant un poids (257) et un élément élastique (259), l'élément élastique (259) étant disposé entre le poids (257) et le logement (119) et adapté pour appliquer une force de sollicitation au poids (257), dans lequel le poids (257) va et vient dans la direction longitudinale de la mèche d'outil (119) contre la force de sollicitation de l'élément élastique (259), moyennant quoi le réducteur dynamique de vibrations (253) réduit les vibrations qui sont provoquées dans le logement (119) dans la direction longitudinale de la mèche d'outil (119) lors de l'opération de travail,
dans lequel le logement (103) comprend un logement interne (109) qui loge le mécanisme de conversion de mouvement (113) et un logement externe (105, 107) qui loge le logement interne (109) et le moteur (111) de sorte que la direction axiale du moteur (111) coupe la direction longitudinale de la mèche d'outil (119),
**caractérisé en ce que**
l'outil électrique comprend en outre un mécanisme de transmission de puissance (117) pour transmettre la rotation du moteur (111) à la mèche d'outil (119),
le réducteur dynamique de vibrations (253) est disposé dans le logement (103) entre une extrémité axiale supérieure du moteur (111) et le logement interne (109),
le poids (257) du réducteur dynamique de vibrations (253) a une forme annulaire elliptique dans une vue en plan dans la direction axiale du moteur (111), et
le logement interne (109) comprend un premier contenant (131a) pour recevoir un premier palier (131) qui supporte en rotation un arbre de sortie (111a) du moteur (111) et un second contenant (133a) pour recevoir un second palier (133) qui supporte en rotation un élément de rotation (117a) du mécanisme de transmission de puissance (117), le logement interne (109) étant configuré de sorte que les contenants de palier (131a, 133a) guident le mouvement linéaire du poids (257) du réducteur dynamique de vibrations (253).

2. Outil électrique comprenant :
un moteur (111),
un mécanisme de conversion de mouvement (113) entraîné par le moteur (111),
un logement (103) qui loge le moteur (111) et le mécanisme de conversion de mouvement (113),
une mèche d'outil (119) disposée dans une extrémité du logement (103) et entraînée par le mécanisme de conversion de mouvement (113) dans la direction longitudinale de la mèche d'outil (119) pour réaliser une opération prédéterminée,
une poignée (102) raccordée à l'autre extrémité du logement (103), et
un réducteur dynamique de vibrations (243) comprenant un poids (247) et un élément élastique (249), l'élément élastique (249) étant disposé entre le poids (247) et
le logement (119) et adapté pour appliquer une force de sollicitation au poids (247), dans lequel le poids (247) va et vient dans la direction longitudinale de la mèche d'outil (119) contre la force de sollicitation de l'élément élastique (249), moyennant quoi le réducteur dynamique de vibrations (243) réduit les vibrations qui sont provoquées dans le logement (119) dans la direction longitudinale de la mèche d'outil (119) lors de l'opération de travail,
dans lequel le logement (103) comprend un logement interne (109) qui loge le mécanisme de conversion de mouvement (113) et un logement externe (105, 107) qui loge le logement interne (109) et le moteur (111) de sorte que la direction axiale du moteur (111) coupe la direction longitudinale de la mèche d'outil (119),
**caractérisé en ce que**
l'outil électrique comprend en outre un mécanisme de transmission de puissance (117) pour transmettre la rotation du moteur (111) à la mèche d'outil (119),
le poids (247) du réducteur dynamique de vibrations (243) a la forme d'un fer à cheval dans une vue en plan dans la direction axiale du moteur (111), et
le réducteur dynamique de vibrations (243) est disposé dans un espace (241) existant dans le logement interne (109) entre une extrémité axiale supérieure du moteur (111) et le mécanisme de conversion de mouvement (113), le réducteur dynamique de vibrations (243) étant configuré de sorte que le mouvement linéaire du poids (247) du réducteur dynamique de vibrations (243) est guidé par des éléments constitutifs (113b, 117a) du mécanisme de conversion de mouvement (113) et du mécanisme de transmission de puissance (117).
